(19) Europäisches Patentamt
European Patent Office
Office européen des brevets

(11) **EP 4 099 450 B1**

(12) **EUROPEAN PATENT SPECIFICATION**

(45) Date of publication and mention of the grant of the patent:
**08.07.2026 Bulletin 2026/28**

(21) Application number: **21747760.3**

(22) Date of filing: **29.01.2021**

(51) International Patent Classification (IPC):
$H01M\ 4/62$ (2006.01)     $H01M\ 4/36$ (2006.01)
$H01M\ 4/38$ (2006.01)     $H01M\ 10/0525$ (2010.01)
$H01M\ 4/02$ (2006.01)     $H01M\ 4/134$ (2010.01)

(52) Cooperative Patent Classification (CPC):
**H01M 4/622; H01M 4/134; H01M 4/364;**
**H01M 4/386; H01M 10/0525;** H01M 2004/027;
Y02E 60/10

(86) International application number:
**PCT/KR2021/001224**

(87) International publication number:
**WO 2021/154039 (05.08.2021 Gazette 2021/31)**

(54) **NEGATIVE ELECTRODE BINDER COMPOSITION, NEGATIVE ELECTRODE AND LITHIUM SECONDARY BATTERY INCLUDING THE SAME**

BINDEMITTELZUSAMMENSETZUNG FÜR NEGATIVE ELEKTRODEN, NEGATIVE ELEKTRODE UND LITHIUM-SEKUNDÄRBATTERIE, DIE DIESE ENTHÄLT

COMPOSITION DE LIANT POUR ÉLECTRODE NÉGATIVE, ÉLECTRODE NÉGATIVE ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2020 KR 20200011309**

(43) Date of publication of application:
**07.12.2022 Bulletin 2022/49**

(73) Proprietor: LG Chem, Ltd.
**Seoul 07336 (KR)**

(72) Inventors:
• **KANG, Min Ah**
 **Daejeon 34122 (KR)**
• **SON, Jeong Man**
 **Daejeon 34122 (KR)**
• **LEE, Sung Jin**
 **Daejeon 34122 (KR)**
• **RYU, Dong Jo**
 **Daejeon 34122 (KR)**
• **HAN, Seon Hee**
 **Daejeon 34122 (KR)**
• **HAN, Jung Sup**
 **Daejeon 34122 (KR)**
• **WOO, Jung Eun**
 **Daejeon 34122 (KR)**
• **CHOI, Cheol Hoon**
 **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 3 154 113      WO-A1-2015/008626
WO-A1-2018/173717      JP-A- 2008 537 841
KR-A- 20120 038 994      KR-A- 20150 037 276
KR-A- 20180 078 353      KR-B1- 101 686 475
US-A1- 2018 258 202

**Description**

**TECHNICAL FIELD**

The present invention relates to a negative electrode binder composition, a negative electrode and a lithium secondary battery including the same, and more particularly, to a negative electrode binder composition capable of effectively preventing deintercalation of a silicon-based negative electrode active material while minimizing reduction in electrode flexibility, and a negative electrode and a lithium secondary battery including the same.

**BACKGROUND ART**

With the advent of technologies for portable devices such as portable computers, portable phones, and cameras, and for electric vehicles, there is a rapidly rising demand for secondary batteries as an energy source. Among such secondary batteries, lithium secondary batteries having high energy density and voltage, long cycle life, and low self-discharging rate have been commercialized and widely used.

An electrode of a lithium secondary battery is prepared by mixing a positive electrode active material or a negative electrode active material with a binder, a conductive material, etc., dispersing the mixture in a solvent to prepare an electrode slurry, then applying the electrode slurry on the surface of an electrode current collector, and performing drying and rolling. In the process, the binder is used to secure adhesion or binding strength between the active materials, and between the active material and the electrode current collector, and currently, as a secondary battery binder material, polyvinylidene fluoride (PVdF), styrene-butadiene rubber (SBR)/carboxy methyl cellulose (CMC), etc. are commercially available.

Meanwhile, with the rising demand for high capacity batteries in recent years, efforts have been actively made to use a silicon-based negative electrode active material having a large discharge capacity. However, the silicon-based negative electrode active material greatly expands in volume during charging/discharging, and the currently commercialized binders such as PVdF, SBR, and CMC are not capable enough to control the volume expansion of the silicon-based negative electrode active material, and accordingly, with repeated cycles of charging/discharging, the negative electrode active material is deintercalated from the electrode, resulting in a rapid deterioration in lifespan characteristics of batteries.

In order to overcome the limitations described above, a method of preventing the volume expansion of a silicone-based active material by using a high strength polymer such as polyimide as a binder has been proposed (see Patent Document 1). However, when the high strength polymer is used as a binder, there remains a problem in that processibility in the battery production is reduced due to extremely deteriorated flexibility of an electrode.

[PRIOR ART Document No.]

Patent Document 1: Japanese Patent Application Publication No. 2009-245773

EP 3 154 113 A1 discloses a binder composition for a lithium ion secondary battery electrode containing a copolymer X and a solvent. The copolymer X is obtained from a monomer composition X that contains at least 20.0 mass% and no greater than 75.0 mass% of an ethylenically unsaturated carboxylic acid compound (A) composed of either or both of an ethylenically unsaturated carboxylic acid and an ethylenically unsaturated carboxylic acid salt, and at least 20.0 mass% and no greater than 75.0 mass% of a copolymerizable compound (B) that has an ethylenically unsaturated bond and a solubility of at least 7 g in 100 g of water at 20°C.

WO 2015/008626 A1 discloses a binder composition for a storage device containing a water-soluble polymer (A) that contains repeating units derived from (meth)acrylamide and having a weight-average molecular weight of $3 \times 10^5$ - $6 \times 10^6$; and a liquid medium.

WO 2018/173717 A1 discloses a binder composition for non-aqueous secondary batteries, which contains a water-insoluble polymer and a water-soluble polymer, and wherein the water-insoluble polymer contains from 70% by mass to 100% by mass of an aliphatic conjugated diene monomer unit, while the water-soluble polymer has a carboxy group and a hydroxy group.

US 2018/258202 A1 discloses a binder composition for a non-aqueous secondary battery electrode containing a water-soluble polymer including, in a proportion of at least 0.1 mass% and not more than 20 mass%, a monomer unit derived from a monomer represented by general formula $CH_2=C(R^1)-NH-R^2-OH$, wherein $R^1$ is hydrogen or an alkyl group and $R^2$ is $(CHR^3)_n(O(CHR^3)_m)_l$ with n = 1 to 10, m = 1 to 4, l = 0 to 3, and wherein $R^3$ is hydrogen or an alkyl group having a carbon number of 1 to 4.

**DISCLOSURE OF THE INVENTION**

## TECHNICAL PROBLEM

In order to solve the above problem, the present invention provides a negative electrode binder composition capable of effectively preventing deintercalation of a silicon-based negative electrode active material while minimizing reduction in electrode flexibility.

In addition, the present invention includes the negative electrode binder composition, and thus provides a negative electrode having excellent electrode flexibility and excellent lifespan characteristics when the composition is applied to a secondary battery, and lithium secondary battery including the same.

## TECHNICAL SOLUTION

In an aspect, the present invention provides a polymer (A) of a first monomer mixture including 50 to 90 parts by weight of a (meth)acrylamide group-containing monomer, 5 to 45 parts by weight of an unsaturated carboxylic acid-based monomer, and 1 to 25 parts by weight of a monomer having a solubility in water of 100 g/L or less, which is at least one selected from the group consisting of alkyl (meth)acrylate having 1 to 10 carbon atoms, (meth)acrylonitrile, and styrene, and wherein the solubility is measured by adding the monomer to 1 L of water at 25 °C; and a particulate polymer (B), wherein the particulate polymer (B) is a polymer of a second monomer mixture containing a conjugated diene-based monomer, an aromatic vinyl-based monomer, and an unsaturated carboxylic acid-based monomer, wherein the polymer (A) and the particulate polymer (B) are included in a weight ratio of 60:40 to 90:10.

In another aspect, the present invention provides a negative electrode according to claim 6 containing a silicon-based negative electrode active material and the negative electrode binder composition of the present invention.

In another aspect, the present invention provides a lithium secondary battery according to claim 9 including the negative electrode containing the negative electrode binder composition according to the present invention.

Further embodiments are disclosed in the dependent claims

## ADVANTAGEOUS EFFECTS

A negative electrode binder composition according to the present invention contains a polymer (A) having excellent adhesion to a silicon-based negative electrode active material, and a particulate polymer (B) having excellent flexibility together, and thus, when an electrode is formed using the negative electrode binder composition of the present invention, deterioration of lifespan characteristics due to deintercalation of the silicon-based negative electrode active material may be prevented, and cracks or breakages due to reduction in electrode flexibility in the battery production process may be minimized. In particular, when the polymer (A) is included in an amount of 50 parts by weight or greater as in the present invention, the deintercalation of the silicon-based negative electrode active material is prevented, which may lead to effective prevention of deterioration in life characteristics.

In addition, when the polymer (A) and the particulate polymer (B) are mixed and used as in the binder composition of the present invention, a binder composition that has a lower moisture content than a conventional binder composition using a water-soluble polymer may be obtained. The water-soluble polymer such as carboxymethylcellulose, polyacrylic acid, or polyacrylamide, which has been typically used in the conventional binder composition has a high moisture content due to hydrophilic properties resulting from hydrophilic functional groups. When the binder composition having a high moisture content is used as such, side reactions or gas generation in a battery may be caused. In contrast, the binder composition of the present invention, by including a monomer having a low solubility in water in the polymer (A), regulates the amount of hydrophilic functional groups, and by using a non-hydrophilic particulate polymer, has a low moisture content. Accordingly, the use of the binder composition of the present invention may lead to minimizing the occurrence of side reactions or gases in the battery due to the presence of moisture.

## BEST MODE FOR CARRYING OUT THE INVENTION

Hereinafter, the present invention will be described in more detail.

### Negative Electrode Binder Composition

First, a negative electrode binder composition according to the present invention will be described.

The negative electrode binder composition of the present invention includes a polymer (A) of a first monomer mixture including a (meth)acrylamide group-containing monomer, an unsaturated carboxylic acid-based monomer, and a monomer having a solubility in water of 100 g/L or less; and a particulate polymer (B).

Hereinafter, each component of the binder composition according to the present invention will be described in detail.

**(1) Polymer (A)**

The polymer (A) is a polymer of a first monomer mixture containing (a1) a (meth)acrylamide group-containing monomer, (a2) an unsaturated carboxylic acid-based monomer, and (a3) a monomer having a solubility in water of 100 g/L or less.

As the (a1) (meth)acrylamide group-containing monomer, for example, at least one monomer selected from the group consisting of acrylamide, N-methylolacrylamide, N-butoxymethylacrylamide, N-methylolmethacrylamide, N-butoxymethylmethacrylamide, N,N-diethylacrylamide, N,N-dimethylacrylamide, N,N-diethylmethacrylamide, N-ethylacrylamide, N-propylacrylamide, and N-tertiary butylacrylamide may be used alone or in combination, but the examples thereof are not limited thereto.

The (a1) (meth)acrylamide group-containing monomer may be included in an amount of 50 to 90 parts by weight, preferably 50 to 85 parts by weight, more preferably 55 to 80 parts by weight, with respect to 100 parts by weight of the first monomer mixture. When the amount of the (meth)acrylamide group-containing monomer satisfies the above range, appropriate durability and adhesion of an electrode may be achieved.

As the (a2) unsaturated carboxylic acid-based monomer, for example, at least one selected from the group consisting of acrylic acid, methacrylic acid, crotonic acid, isocrotonic acid, maleic anhydride, fumaric acid, and itaconic acid may be used alone or in combination, but the examples thereof are not limited thereto.

The (a2) unsaturated carboxylic acid-based monomer may be included in an amount of 5 to 45 parts by weight, preferably 10 to 40 parts by weight, more preferably 10 to 30 parts by weight, with respect to 100 parts by weight of the first monomer mixture. When the amount of the unsaturated carboxylic acid-based monomer satisfies the above range, adhesion between a current collector and an active material may be sufficiently secured.

The (a3) monomer having a solubility in water of 100 g/L or less refers to a monomer having a dissolved amount of 100 g or less when added to 1 L of water at 25 °C. When the polymer (A) contains a monomer having a low solubility in water as such, reduction in moisture content in an electrode may be achieved.

As the monomer having a solubility in water of 100 g/L or less, at least one monomer selected from the group consisting of alkyl (meth)acrylate having 1 to 10 carbon atoms, (meth)acrylonitrile, and styrene is used.

Specific examples of the alkyl (meth)acrylate having 1 to 10 carbon atoms may include methyl acrylate, ethyl acrylate, propyl acrylate, isopropyl acrylate, n-butyl acrylate, isobutyl acrylate, n-amyl acrylate , isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, or 2-ethylhexyl methacrylate, but are not limited thereto.

Specific examples of the (meth)acrylonitrile may include acrylonitrile and methacrylonitrile. The (a3) monomer having a solubility in water of 100 g/L or less may be included in an amount of 1 to 25 parts by weight, preferably 1 to 20 parts by weight, more preferably 1 to 15 parts by weight, with respect to 100 parts by weight of the first monomer mixture. When the amount of the monomer having a solubility in water of 100 g/L or less satisfies the above range, a polymer soluble in water, with reduced moisture content in an electrode may be achieved.

The polymer (A) may be prepared by mixing the monomer components to form a first monomer mixture, and then polymerizing the first monomer mixture.

In this case, the polymerization may be performed using conventional polymerization methods known in the art, such as solution polymerization and emulsion polymerization, and temperature and time for the polymerization may be appropriately determined according to polymerization method and the type of polymerization initiator. For example, the polymerization temperature may be 50 °C to 100 °C, and the polymerization time may be 1 to 10 hours.

In addition, a polymerization initiator, a molecular weight regulator, etc. may be additionally added during the polymerization if necessary.

As the polymerization initiator, an inorganic or organic peroxide may be used, and for example, a water-soluble initiator including potassium persulfate, sodium persulfate, ammonium persulfate, etc. may be used.

As the molecular weight regulator, for example, mercaptans, terpines such as ter-pinolene, dipentene, and t-terpinene, or halogenated hydrocarbons such as chloroform and carbon tetrachloride may be used.

Meanwhile, the polymer (A) may have a weight average molecular weight of 100,000 g/mol to 2,000,000, preferably 300,000 g/mol to 1,000,000 g/mol, more preferably 400,000 g/mol to 800,000 g/mol. When the weight average molecular weight of the polymer (A) satisfies the above range, appropriate dispersibility and adhesion may be achieved.

Meanwhile, the weight average molecular weight was measured under the following conditions, using gel permeation chromatography (GPC, Waters GPC (Waters, USA)).

- Column: Two columns of Waters Ultrahydrogel Linear connected
- Column temperature: 40 °C
- Eluent: 0.1 M $NaNO_3$, pH 7 Phosphate buffer
- Flow rate: 1.0 mL/min

- Concentration: ~ 1 mg/mL (20 μL injection)
- Detector: Waters 2414 RI detector
- Standard: Polyacrylic acid (corrected by cubic function)

## (2) Particulate polymer (B)

The particulate polymer (B) is intended to improve electrode flexibility when producing a negative electrode.

The particulate polymer (B) may have an average particle diameter of 1 μm or less, preferably 10 nm to 800 nm, more preferably 50 nm to 500 nm. When the particle size of the particulate polymer is out of the above range, the stability of the particles itself is deteriorated, which may thus trouble slurry mixing or coating.

In this case, the average particle diameter is measured using a particle size meter (NICOMP380, Particle Size System) through a dynamic light scattering method after preparing a sample by diluting the particulate polymer (B) to 1 wt% in deionized water.

To be specific, the particulate polymer (B) is a polymer of a second monomer mixture containing (b1) a conjugated diene-based monomer, (b2) an aromatic vinyl-based monomer, and (b3) an unsaturated carboxylic acid-based monomer.

As the (b1) conjugated diene-based monomer, for example, at least one selected from the group consisting of 1,3-butadiene, isoprene, chloroprene, and piperylene may be used alone or in combination, but the examples thereof are no t limited thereto.

The (b1) conjugated diene-based monomer may be included in an amount of 10 to 96 parts by weight, preferably 10 to 70 parts by weight, more preferably 10 to 60 parts by weight, with respect to 100 parts by weight of the second monomer mixture. When the amount of the conjugated diene-based monomer satisfies the above range, excellent adhesion to the silicon-based negative electrode active material may be kept.

Next, as the (b2) aromatic vinyl-based monomer, for example, at least one selected from the group consisting of styrene, α-methylstyrene, β-methylstyrene, p-methylstyrene, p - t-butylstyrene, and vinyltoluene may be used alone or in combination, but the examples thereof are not limited thereto.

The (b2) aromatic vinyl-based monomer may be included in an amount of 1 to 80 parts by weight, preferably 10 to 70 parts by weight, more preferably 30 to 70 parts by weight, with respect to 100 parts by weight of the second monomer mixture. When the amount of the (b2) aromatic vinyl-based monomer satisfies the above range, beneficially, excellent strength and electrolyte affinity are achieved.

Next, as the (b3) unsaturated carboxylic acid-based monomer, for example, at least one selected from the group consisting of acrylic acid, methacrylic acid, crotonic acid, isocrotonic acid, maleic anhydride, fumaric acid, and itaconic acid may be used alone or in combination, and the examples thereof are not limited thereto.

The (b3) unsaturated carboxylic acid-based monomer may be included in an amount of 1 to 20 parts by weight, preferably 1 to 10 parts by weight, more preferably 1 to 5 parts by weight, with respect to 100 parts by weight of the second monomer mixture. When the amount of the (b3) unsaturated carboxylic acid-based monomer satisfies the above range, excellent dispersibility may be achieved when the monomer is added to the negative electrode slurry composition.

Meanwhile, the second monomer mixture may further contain a comonomer in addition to the components (b1) to (b3).

As the comonomer, at least one selected from the group consisting of a vinyl cyan-based monomer, a (meth) acrylate-based monomer, and a (meth)acrylamide-based monomer may be used.

Specific examples of the vinyl cyan-based monomer may include acrylonitrile, methacrylonitrile, and a monomer having a cyan functional group, but are not limited thereto.

Specific examples of the (meth)acrylate-based monomer may include methyl acrylate, ethyl acrylate, propyl acrylate, isopropyl acrylate, n-butyl acrylate, isobutyl acrylate, n-amyl acrylate , isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, or hydroxypropyl methacrylate, but are not limited thereto.

Specific examples of the (meth)acrylamide-based monomer may include acrylamide, N-methylolacrylamide, N-butoxymethylacrylamide, N-methylolmethacrylamide, or N-butoxymethylmethacrylamide, but are not limited thereto.

The particulate polymer (B) may be prepared by polymerizing a monomer mixture containing the above-described monomer components.

In this case, the polymerization may be performed using conventional polymerization methods known in the art, such as solution polymerization and emulsion polymerization, and temperature and time for the polymerization may be appropriately determined according to polymerization method and the type of polymerization initiator. For example, the polymerization temperature may be 50 °C to 200 °C, and the polymerization time may be 1 to 20 hours.

In addition, a polymerization initiator, an emulsifier, an activator, a crosslinking agent, a molecular weight regulator, etc. may be further added during the polymerization if necessary.

As the polymerization initiator, an inorganic or organic peroxide may be used, and for example, a water-soluble initiator such as potassium persulfate, sodium persulfate, and ammonium persulfate, and an oil-soluble initiator such as cumene hydroperoxide and benzoyl peroxide may be used.

As the emulsifier, oleic acid, stearic acid, lauric acid, fatty acid salts such as sodium or potassium salts of mixed fatty acids, or general anionic emulsifiers such as sulfate, sulfonate, phosphate, and sulfosuccinate may be used.

In addition, to accelerate initiation reaction of peroxides, an activator may be further included together with the polymerization initiator, and the activator may be at least one selected from the group consisting of sodium formaldehyde sulfoxylate, sodium ethylenediamine tetraacetate, ferrous sulfate, and dextrose.

As the crosslinking agent, for example, ethylene glycol dimethacrylate, diethylene glycol dimethacrylate, triethylene glycol dimethacrylate, 1,3-butanediol dimethacrylate, 1,6-hexanediol dimethacrylate, neopentyl glycol dimethacrylate, trimethylol propane trimethacrylate, trimethylol methane triacrylate, or aryl methacrylate (AMA) may be used. As the grafting agent, for example, aryl methacrylate (AMA), triaryl isocyanurate (TAIC), triaryl amine (TAA), or diaryl amine (DAA) may be used.

As the molecular weight regulator, for example, mercaptans, terpines such as ter-pinolene, dipentene, and t-terpinene, or halogenated hydrocarbons such as chloroform and carbon tetrachloride may be used.

Meanwhile, the negative electrode binder composition of the present invention includes the polymer (A) and particulate polymer (B) in a weight ratio of 60:40 to 90:10. When the weight ratio of the polymer (A) and the particulate polymer (B) satisfies the above range, excellent adhesion and lifespan characteristics may be achieved. When the polymer (A) is contained in a proportion of less than 50%, the adhesion to the silicon-based active material is reduced, which may cause a rapid deterioration in characteristics as charging/discharging is performed, and when the polymer (B) is contained in a proportion of less than 5%, cracks or breakages may occur in the battery production process due to reduced electrode flexibility.

In the binder composition according to the present invention, the polymer (A) and the particulate polymer (B) are mixed and used, and thus the binder composition has a lower moisture content than a conventional binder composition using a water-soluble polymer. Specifically, the film prepared by drying the negative electrode binder composition has a moisture content of 10 wt% or less, preferably 8 wt% less, more preferably 5 wt% or less. Therefore, the negative electrode active material layer prepared using the negative electrode binder composition according to the present invention also has a low moisture content, thereby minimizing side reactions and/or gases generated due to moisture present in an electrode to improve lifespan characteristics.

In this case, the binder composition was applied on a release film and dried to prepare a 1 mm-thick film, and then the prepared film was stored at room temperature at a relative humidity of 50% for a week to measure the moisture content at 150 °C for 20 min, using a moisture analyzer.

Meanwhile, in order to improve binder properties, the binder composition of the present invention may further include an additive component in addition to the components described above. Examples of the additive include an antioxidant and a preservative. In particular, the antioxidant may be preferably used to prevent latex particles from deteriorating due to softening, gelation, etc. in the battery operation process.

The additive may be included in an appropriate amount within a range that does not impair physical properties of the binder composition, for example, may be included in an amount of 0.5 parts by weight or less, preferably 0.01 to 0.2 parts by weight, with respect to 100 parts by weight of the binder composition.

## Negative Electrode

Next, a negative electrode according to the present invention will be described.

The negative electrode according to the present invention includes a negative electrode active material layer containing a silicon-based negative electrode active material and a binder composition.

The negative electrode according to the present invention may be produced through a conventional method of producing a negative electrode used in the art, except for using the binder composition according to the present invention described above.

For example, the negative electrode may be prepared in a way that a negative electrode slurry composition containing a negative electrode active material, the binder composition of the present invention, and a solvent is applied on a negative electrode current collector and dried to form a negative electrode active material layer and then rolled, or the negative electrode slurry composition is applied on a separate substrate, dried, and then bonded to a negative electrode current collector through processes such as pressing or lamination, and then rolled.

The negative electrode active material includes a silicon-based negative electrode active material. The silicon-based negative electrode active material may include at least one selected from the group consisting of metal silicon (Si), silicon oxide ($SiO_x$, where, $0<x<2$) silicon carbide (SiC), and Si-Y alloy (the Y is an element selected from the group consisting of alkali metal, alkaline earth metal, Group 13 element, Group 14 element, transition metal, rare earth element, and a combination thereof, and is not Si). The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The silicon-based negative electrode active material exhibits higher capacity characteristics than the carbon-based negative electrode active material, and thus, when the silicon-based negative electrode active material is additionally included, superior capacity characteristics may be achieved. However, the silicon-based negative electrode active material has a large volume change during charging/discharging, and thus is deintercalated from an electrode when charging/discharging is repeated, thereby causing a rapid deterioration in battery characteristics, making it unsuitable for commercialization. However, when the binder composition of the present invention is applied, the deintercalation of the silicon-based negative electrode active material is effectively prevented, and a secondary battery having excellent capacity characteristics and excellent cycle characteristics may be obtained.

Meanwhile, the negative electrode active material, in addition to the silicon-based negative electrode active material, may further include other types of negative electrode active materials. Examples of the other types of negative electrode active materials may include a carbon-based material such as artificial graphite, natural graphite, graphitized carbon fiber, and amorphous carbon; a metallic compound alloyable with lithium such as Al, Sn, Pb, Zn, Bi, In, Mg, Ga, Cd, an Si alloy, an Sn alloy, or an Al alloy; a metal oxide which may be doped and undoped with lithium such as $SnO_2$, a vanadium oxide, and a lithium vanadium oxide; or a composite including the metallic compound and the carbon-based material such as an Sn-C composite, and among the above-described materials, the carbon-based materials are particularly preferred.

Specifically, the negative electrode active material may be a mixture of a silicon-based negative electrode active material and a carbon-based negative electrode active material.

The negative electrode active material in which the silicon-based negative electrode active material and other types of negative electrode active materials are combined may have a total amount of 70 wt% to 99 wt%, preferably 80 wt% to 98 wt%, with respect to the total solid amount in the negative electrode slurry composition. When the amount of the negative electrode active material satisfies the above range, excellent capacity characteristics may be achieved.

Meanwhile, the silicon-based negative electrode active material may be included in an amount of 5 wt% or more, preferably 5 wt% to 30 wt%, and more preferably 5 wt% to 15 wt% of the total negative electrode active material. When the amount of the silicon-based negative electrode active material in the total negative electrode active material satisfies the above range, a secondary battery having both excellent capacity characteristics and excellent cycle characteristics may be achieved.

The binder composition is the same as the binder composition according to the present invention described above. The binder composition may be included in an amount of 5 wt% or less, preferably 1 wt% to 3 wt%, with respect to the total solid amount in the negative electrode slurry composition. When the amount of the binder satisfies the above range, excellent electrode adhesion with a minimized increase in electrode resistance may be achieved.

Meanwhile, the negative electrode slurry composition may further include a solvent, if necessary, for viscosity control, etc. In this case, the solvent may be water, an organic solvent, or a mixture thereof. Examples of the organic solvent include amide-based polar organic solvents such as dimethylformamide (DMF), diethyl formamide, dimethyl acetamide (DMAc), or N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl -2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; Glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol Mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyl lactone, or ε-propiolactone, and any one or a mixture of two or more thereof may be used, but the examples thereof are not limited thereto.

The solvent may be included in an amount such that the solid amount in the negative electrode slurry composition is 40 wt% to 70 wt%, preferably 45 wt% to 70 wt%. When the solid amount of the negative electrode slurry is less than 40 wt%, the electrode loading amount may decrease, thereby increasing process cost, and binder migration occurs, thereby causing electrode adhesion deterioration and coating defects. On the other hand, when the solid amount of the negative electrode slurry exceeds 85 wt%, the viscosity of the negative electrode slurry composition becomes too high, resulting in poor processability and coating defects.

In addition, the negative electrode slurry composition may further include a conductive material, if necessary.

The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; carbon fluoride; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative, and the like may be used.

The conductive material may be included in an amount of 10 wt% or less, preferably 0.1 wt% to 10 wt%, more preferably 0.1 wt% to 5 wt%, with respect to the total solid amount in the negative electrode slurry composition.

In addition, the negative electrode slurry composition may further include additives such as a viscosity regulator and a filler, if necessary.

The viscosity regulator may be carboxymethylcellulose, polyacrylic acid, etc., and due to the addition, the viscosity of the negative electrode slurry may be regulated to facilitate the preparation of the negative electrode slurry and the coating process on the negative electrode current collector.

The filler is selectively used as a component for preventing the expansion of an electrode, and is not particularly limited as long as it is a fibrous material without causing chemical changes in a battery, and for example, olefin-based polymers such as polyethylene and polypropylene; fibrous materials such as glass fiber and carbon fiber may be used.

Meanwhile, the negative electrode current collector is not particularly limited as long as it has conductivity without causing a chemical change in a battery, and For example, copper, stainless steel, aluminum, nickel, titanium, an alloy thereof, one surface-treated with one of carbon, nickel, titanium, silver, and the like, a fired carbon, and the like may be used.

The negative electrode current collector may typically have a thickness of 3 $\mu$m to 500 $\mu$m, and fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

## Lithium Secondary Battery

Next, a secondary battery according to the present invention will be described.

The secondary battery according to the present invention includes the negative electrode of the present invention described above. Specifically, the secondary battery according to the present invention may include a positive electrode, a negative electrode, a separator interposed between the positive electrode and the negative electrode, and an electrolyte, and in this case, the negative electrode is the negative electrode of the present invention described above. Since the negative electrode has been described above, a detailed description will be omitted, and only the remaining components will be described below.

The positive electrode may be generally used in the art, and is not particularly limited. For example, the positive electrode may be prepared when a positive electrode slurry composition is applied and dried, and accordingly, a positive electrode active material layer is formed. Specifically, the positive electrode active material layer may be formed by applying a positive electrode slurry composition on a positive electrode current collector and drying the coated positive electrode collector, or may be formed by applying a positive electrode slurry composition on a separate support and then laminating a film separated from the support on the positive electrode current collector. If necessary, after forming the positive electrode active material layer through the methods described above, a process of rolling may be additionally performed. In this case, drying and rolling may be performed under appropriate conditions in consideration of physical properties of a desired electrode as a final product, and the process is not particularly limited thereto.

The positive electrode current collector is not particularly limited as long as it has conductivity without causing a chemical change, and for example, copper, stainless steel, aluminum, nickel, titanium, an alloy thereof, one surface-treated with one of carbon, nickel, titanium, silver, and the like, a fired carbon, and the like may be used.

The positive electrode current collector may typically have a thickness of 3 $\mu$m to 500 $\mu$m, and fine irregularities may be formed on the surface of the positive electrode current collector to improve the adhesion of a positive electrode active material. For example, the positive electrode current collector may be used in various forms such as a film, a sheet, a foil, a net, a porous body, a foam body, and a non-woven fabric body.

Meanwhile, the positive electrode slurry composition may include a positive electrode active material, a binder, and a solvent, and may further include a conductive material, an additive, and the like, if necessary.

As the positive electrode active material, positive electrode active materials well known in the art may be used without limitation, and for example, lithium cobalt-based oxide, lithium nickel-based oxide, lithium manganese-based oxide, lithium iron phosphate, lithium nickel manganese cobalt-based oxide, or a combination thereof may be used. To be specific, as the positive electrode active material, $LiCoO_2$, $LiNiO_2$, $LiMn_2O_4$, $LiCoPO_4$, $LiFePO_4$, and $LiNi_aMn_bCo_cO_2$ (where, 0 <a, b, c <1), etc. may be used, but the examples thereof are not limited thereto.

The binder serves to secure adhesion between active materials or between the active material and the current collector, and general binders used in the art may be used, and the type is not particularly limited. As the binder, for example, polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The binder may be included in an amount of 5 wt% or less, preferably 1 wt% to 3 wt%, with respect to the total solid amount in the positive electrode slurry composition. When the amount of the binder satisfies the above range, excellent electrode adhesion with a minimized increase in electrode resistance may be achieved.

The solvent serves to mix each component in the positive electrode slurry composition and adjust viscosity, for example, water, an organic solvent, or a mixture thereof may be used. Examples of the organic solvent include amide-based polar organic solvents such as dimethylformamide (DMF), diethyl formamide, dimethyl acetamide (DMAc), or N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl -2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; Glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol Mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, $\gamma$-butyl lactone, or $\varepsilon$-propiolactone, and any one or a mixture of two or more thereof may be used, but the examples thereof are not limited thereto.

The solvent may be included in an amount such that the solid amount in the positive electrode slurry composition is 60 wt% to 85 wt%, preferably 65 wt% to 80 wt%. When the solid amount of the positive electrode slurry composition is less than 60 wt%, the electrode loading amount may decrease, thereby increasing process cost, and binder migration occurs, thereby causing electrode adhesion deterioration and coating defects. On the other hand, when the solid amount of the positive electrode slurry exceeds 85 wt%, the viscosity of the positive electrode slurry composition becomes too high, resulting in poor processibility and coating defects.

The conductive material serves as a component for further increasing conductivity, and conductive materials for secondary batteries well known in the art, for example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative may be used without limitation.

The conductive material may be included in an amount of 10 wt% or less with respect to the total solid amount in the positive electrode slurry composition, preferably 0.1 wt% to 10 wt%, more preferably 0.1 wt% to 5 wt%.

Meanwhile, the positive electrode current collector is not particularly limited as long as it has conductivity without causing a chemical change in a battery. For example, stainless steel, aluminum, nickel, titanium, baked carbon, or aluminum or stainless steel that is surface-treated with one of carbon, nickel, titanium, silver, and the like may be used. In addition, the positive electrode current collector may typically have a thickness of 3 to 500 $\mu$m, and fine irregularities may be formed on a surface of the current collector to improve the adhesion of a positive electrode material. For example, the positive electrode current collector may be used in various forms such as a film, a sheet, a foil, a net, a porous body, a foam body, and a non-woven fabric body.

Next, a separator is to separate the negative electrode and the positive electrode and to provide a movement path for lithium ions, and any separator may be used without particular limitation as long as it is typically used as a separator in a secondary battery. Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

Next, the electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include a non-aqueous organic solvent and a lithium salt.

As the non-aqueous organic solvent, non-aqueous organic solvents used in the art, for example, a cyclic carbonate-based solvent, a linear carbonate-based solvent, a linear ester-based solvent, a cyclic ester-based solvent, or a combination thereof may be used, and the type is not particularly limited.

The cyclic carbonate-based solvent may be, for example, at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

The linear carbonate-based organic solvent may be, for example, at least one selected from the group consisting of dimethyl carbonate (DMC), diethyl carbonate (DEC), dipropyl carbonate, ethylmethyl carbonate (EMC), methylpropyl carbonate, and ethylpropyl carbonate.

The linear ester-based organic solvent may be, for example, at least one selected from the group consisting of methyl acetate, ethyl acetate, propyl acetate, methyl propionate, ethyl propionate, propyl propionate, and butyl propionate.

The cyclic ester-based organic solvent may be, for example, at least one selected from the group consisting of butyrolactone, $\gamma$-valerolactone, $\gamma$-caprolactone, $\varepsilon$-valerolactone, and $\varepsilon$-caprolactone.

As the lithium salt, various lithium salts commonly used in an electrolyte for a lithium secondary battery may be used without limitation. For example, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$.

To be specific, the lithium salt may be at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiTFSI ($LiN(SO_2CF_3)_2$), LiFSI ($LiN(SO_2F)_2$), $LiCH_3SO_3$, $LiCF_3CO_2$, $LiCH_3CO_2$, and LiBETI ($LiN(SO_2CF_2CF_3)_2$.

In addition to the electrolyte components, the electrolyte may further include additives for improving life characteristics of a battery, preventing reduction in battery capacity, and increasing battery discharge capacity.

Examples of the additives may be at least one selected from the group consisting of a cyclic carbonate compound, a halogen-substituted carbonate compound, a sultone-based compound, a sulfate-based compound, a phosphate-based compound, a borate-based compounds, a nitrile-based compound, a benzene-based compound, an amine-based compound, a silane-based compound, and a lithium salt-based compound.

The cyclic carbonate-based compound may be, for example, vinylene carbonate (VC) or vinyl ethylene carbonate.

The halogen-substituted carbonate-based compound may be, for example, fluoroethylene carbonate (FEC)).

The sultone-based compound may be, for example, at least one selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may be, for example, ethylene sulfate (Esa), trimethylene sulfate (TMS), or methyl trimethylene sulfate (MTMS).

The phosphate-based compound may be, for example, at least one selected from the group consisting of lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl) phosphite.

The borate-based compound may be, for example, tetraphenylborate, or lithium oxalyldifluoroborate.

The nitrile compound may be, for example, at least one compound selected from the group consisting of. succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be, for example, fluorobenzene, the amine-based compound may be, for example, triethanolamine or ethylenediamine, and the silane-based compound may be, for example, tetravinylsilane.

The lithium salt-based compound is a compound different from the lithium salt contained in the non-aqueous electrolyte, and may be at least one compound selected from the group consisting of $LiPO_2F_2$, LiODFB, LiBOB (lithium bisoxalatoborate ($LiB(C_2O_4)_2$), and $LiBF_4$.

## MODE FOR CARRYING OUT THE INVENTION

Hereinafter, the present invention will be described in more detail through specific Examples.

### Preparation Example 1

800 g of water, 80 g of acrylamide, 18 g of acrylic acid, 2 g of methyl methacrylate, and 0.5 g of ammonium persulfate as a polymerization initiator were put into a reactor, and the mixture was polymerized at 80 °C for 6 hours, thereby preparing polymer (A-1).

**Preparation Example 2**

150 g of water, 50 g of butadiene, 46 g of styrene, 4 g of acrylic acid, and 1 g of ammonium persulfate as a polymerization initiator were put into a reactor, and the mixture was polymerized at 75 °C for 6 hours, thereby preparing particulate polymer (B) having an average particle diameter of 200 nm.

**Preparation Example 3**

800 g of water, 55g of acrylamide, 35g of acrylic acid, 10g of acrylonitrile, and 0.5 g of ammonium persulfate as a polymerization initiator were put into a reactor, and the mixture was polymerized at 80 °C for 6 hours, thereby preparing polymer (A-2).

**Preparation Example 4**

800 g of water, 100 g of acrylamide, and 0.5 g of ammonium persulfate as a polymerization initiator were put into a reactor, and the mixture was polymerized at 80 °C for 6 hours, thereby preparing polymer (C-1).

**Preparation Example 5**

800 g of water, 50g of acrylamide, 30g of acrylic acid, 20g of methyl methacrylate, and 0.5 g of ammonium persulfate as a polymerization initiator were put into a reactor, and the mixture was polymerized at 80 °C for 6 hours, thereby preparing polymer (A-3).

**Preparation Example 6**

800 g of water, 55g of acrylamide, 15g of acrylic acid, 30g of methyl methacrylate, and 0.5 g of ammonium persulfate as a polymerization initiator were put into a reactor, and the mixture was polymerized at 80 °C for 6 hours, thereby preparing polymer (C-2).

**Preparation Example 7**

800 g of water, 40 g of acrylamide, 55 g of acrylic acid, 5 g of methyl methacrylate, and 0.5 g of ammonium persulfate as a polymerization initiator were put into a reactor, and the mixture was polymerized at 80 °C for 6 hours, thereby preparing polymer (C-3).

**Example 1**

The polymer (A-1) prepared in Preparation Example 1 and the particulate polymer (B) prepared in Preparation Example 2 were mixed at a weight ratio of 4:1, thereby preparing a negative electrode binder composition.

**Example 2**

The polymer (A-1) prepared in Preparation Example 1 and the particulate polymer (B) prepared in Preparation Example 2 were mixed at a weight ratio of 2:1, thereby preparing a negative electrode binder composition.

**Example 3**

The polymer (A-1) prepared in Preparation Example 1 and the particulate polymer (B) prepared in Preparation Example 2 were mixed at a weight ratio of 10:1, thereby preparing a negative electrode binder composition.

**Example 4**

The polymer (A-1) prepared in Preparation Example 1 and the particulate polymer (B) prepared in Preparation Example 2 were mixed at a weight ratio of 15:1, thereby preparing a negative electrode binder composition.

**Example 5**

The polymer (A-2) prepared in Preparation Example 3 and the particulate polymer (B) prepared in Preparation Example 2 were mixed at a weight ratio of 2:1, thereby preparing a negative electrode binder composition.

**Example 6**

The polymer (A-3) prepared in Preparation Example 5 and the particulate polymer (B) prepared in Preparation Example 2 were mixed at a weight ratio of 4:1, thereby preparing a negative electrode binder composition.

**Comparative Example 1**

The polymer (A-1) prepared in Preparation Example 1 was used alone as a negative electrode binder composition.

**Comparative Example 2**

The polymer (A-2) prepared in Preparation Example 3 was used alone as a negative electrode binder composition.

**Comparative Example 3**

The polymer (C-1) prepared in Preparation Example 4 was used alone as a negative electrode binder composition.

**Comparative Example 4**

Carboxymethylcellulose (CMC) and the particulate polymer (B) prepared in Preparation Example 2 were mixed at a weight ratio of 2:1, thereby preparing a negative electrode binder composition.

**Comparative Example 5**

The polymer (C-2) prepared in Preparation Example 6 and the particulate polymer (B) prepared in Preparation Example 2 were mixed at a weight ratio of 4:1, thereby preparing a negative electrode binder composition.

**Comparative Example 6**

The polymer (C-3) prepared in Preparation Example 7 and the particulate polymer (B) prepared in Preparation Example 2 were mixed at a weight ratio of 4:1, thereby preparing a negative electrode binder composition.

**Comparative Example 7**

The polymer (A-1) prepared in Preparation Example 1 and the particulate polymer (B) prepared in Preparation Example 2 were mixed at a weight ratio of 1:2, thereby preparing a negative electrode binder composition.

**Experimental Example 1 - Measurement of Moisture Content**

The negative electrode binder compositions of Examples 1 to 6 and Comparative Examples 1 to 7 were each applied on a release film and then dried, thereby preparing 1 mm-thick films. The films prepared as described above were stored for one week at room temperature at a relative humidity of 50%, and then heated at 150 °C for 20 minutes, using a moisture analyzer, and the reduced weight to the initial weight was measured to measure moisture content. The measurement results are shown in Table 1 below.

**Experimental Example 2 - Measurement of Flexibility**

Negative electrode binder compositions each prepared according to Examples 1 to 6 and Comparative Examples 1 to 7, artificial graphite, silicon oxide, and acetylene black were mixed in a weight ratio of 3: 81.6: 14.4: 1 and added to distilled water, thereby preparing negative electrode slurry compositions.

Then, each negative electrode slurry composition prepared as described above was applied on a copper current collector, dried, and rolled, thereby preparing a negative electrode.

Each of the negative electrodes prepared as described above was bent on a long rod having a diameter of 3 mm, and the flexibility was evaluated by observing the occurrence of cracks and breakages in the negative electrode active material layer.

<Evaluation criteria>

∘: No cracks and breakages were observed.
X: cracks and breakages were observed.

**Experimental Example 3 - Measurement of Cycle Characteristics**

(Preparation of Negative Electrode)

Negative electrode binder compositions each prepared according to Examples 1 to 6 and Comparative Examples 1 to 7, artificial graphite, silicon oxide, and acetylene black were mixed in a weight ratio of 3: 81.6: 14.4: 1 and added to distilled water, thereby preparing negative electrode slurry compositions.
Then, each negative electrode slurry composition prepared as described above was applied on a copper current collector, dried, and rolled, thereby preparing a negative electrode.

(Preparation of Secondary Battery)

A polyethylene separator was interposed between the negative electrode and the lithium metal electrode prepared as described above, and a non-aqueous electrolyte was injected thereto, thereby preparing a coin-type secondary battery. In this case, as the non-aqueous electrolyte, a $LiPF_6$ electrolyte was dissolved in a mixed solvent in which ethylene carbonate: ethylmethyl carbonate was mixed in a volume ratio of 3:7 in a concentration of 1 M.
For each of the secondary batteries prepared as described above, charging/discharging was performed twice at 25 °C with a charge/discharge current density of 0.1 C, a charge end voltage of 1.5 V (Li/Li+), and a discharge end voltage of 5 mV (Li/Li+). Then, the charging/discharging was performed 30 times with a charge/discharge current density of 0.2 C, the charge end voltage of 1.5 V (Li/Li+), and the discharge end voltage of 5 mV (Li/Li+) to measure capacity retention. All discharges were performed under constant current/constant voltage conditions, and the end current of the constant voltage discharge was 0.005 C.
In this case, capacity retention rates were calculated according to Equation (1), and the measurement results are shown in Table 1 below.

Equation (1): Capacity retention (%) = (discharge capacity after 32 cycles / discharge capacity after 3 cycles) ×100                   Equation (1):

[Table 1]

|  | Moisture content (%) | Flexibility | Capacity retention rate (%) |
|---|---|---|---|
| Example 1 | 3.1 | O | 88 |
| Example 2 | 4.5 | O | 82 |
| Example 3 | 7.2 | O | 88 |
| Example 4 | 7.9 | O | 89 |
| Example 5 | 3.5 | O | 83 |
| Example 6 | 4.4 | O | 87 |
| Comparative Example 1 | 6.3 | X | 83 |
| Comparative Example 2 | 6.6 | X | 85 |
| Comparative Example 3 | 12.5 | X | 71 |
| Comparative Example 4 | 5.6 | O | 60 |
| Comparative Example 5 | 4.1 | X | 52 |

(continued)

|  | Moisture content (%) | Flexibility | Capacity retention rate (%) |
|---|---|---|---|
| Comparative Example 6 | 6.9 | X | 73 |
| Comparative Example 7 | 2.5 | O | 50 |

As shown in Table 1 above, it is confirmed that electrodes and secondary batteries produced using the binder compositions prepared according to Examples 1 to 6 had excellent electrode flexibility and capacity retention rates as compared to electrodes and secondary batteries produced using the binder compositions prepared according to Comparative Examples 1 to 7.

In addition, it is confirmed that the binder compositions of Examples 1 to 6 using a mixture of the polymer (A) and the particulate polymer (B) had a low moisture content of 8 wt% or less.

**Claims**

1.  A negative electrode binder composition comprising:

    a polymer (A) of a first monomer mixture including 50 to 90 parts by weight of a (meth)acrylamide group-containing monomer,
    5 to 45 parts by weight of an unsaturated carboxylic acid-based monomer, and
    1 to 25 parts by weight of a monomer having a solubility in water of 100 g/L or less, which is at least one selected from the group consisting of alkyl (meth)acrylate having 1 to 10 carbon atoms, (meth)acrylonitrile, and styrene, and wherein the solubility is measured by adding the monomer to 1 L of water at 25 °C; and
    a particulate polymer (B), wherein the particulate polymer (B) is a polymer of a second monomer mixture containing a conjugated diene-based monomer, an aromatic vinyl-based monomer, and an unsaturated carboxylic acid-based monomer;
    wherein the polymer (A) and the particulate polymer (B) are included in a weight ratio of 60:40 to 90:10.

2.  The negative electrode binder composition of claim 1, wherein a film prepared by drying the negative electrode binder composition has a moisture content of 10 wt% or less, wherein the moisture content has been measured as described in the description.

3.  The negative electrode binder composition of claim 1, wherein a film prepared by drying the negative electrode binder composition has a moisture content of 8 wt% or less, wherein the moisture content has been measured as described in the description.

4.  The negative electrode binder composition of claim 1, wherein the particulate polymer (B) has an average particle diameter of 1 μm or less, wherein the average particle diameter has been measured by dynamic light scattering method as described in the description.

5.  The negative electrode binder composition of claim 1, wherein the polymer (A) has a weight average molecular weight of 100,000 g/mol to 2,000,000 g/mol, wherein the weight average molecular weight has been measured by gel permeation chromatography method as described in the description.

6.  A negative electrode comprising a negative electrode active material layer containing a silicon-based negative electrode active material, and the negative electrode binder composition of claim 1.

7.  The negative electrode of claim 6, wherein the negative electrode active material layer further comprises a negative electrode active material other than the silicon-based negative electrode active material.

8.  The negative electrode of claim 7, wherein the silicon-based negative electrode active material is included in an amount of 5 wt% or greater of the total negative electrode active material.

9.  A lithium secondary battery comprising the negative electrode of claim 6.

**Patentansprüche**

1. Negativelektroden-Bindemittelzusammensetzung, umfassend:

ein Polymer (A) einer ersten Monomermischung, die 50 bis 90 Gewichtsteile eines (Meth)acrylamidgruppen-haltigen Monomers enthält,
5 bis 45 Gewichtsteile eines Monomers auf Basis einer ungesättigten Carbonsäure und
1 bis 25 Gewichtsteile eines Monomers mit einer Löslichkeit in Wasser von 100 g/l oder weniger, bei dem es sich um mindestens eines handelt, das aus der Gruppe bestehend aus Alkyl(meth)acrylat mit 1 bis 10 Kohlenstoffatomen, (Meth)acrylnitril und Styrol ausgewählt ist, und wobei die Löslichkeit durch Zugeben des Monomers zu 1 l Wasser bei 25 °C gemessen wird; und
ein teilchenförmiges Polymer (B), wobei es sich bei dem teilchenförmigen Polymer (B) um ein Polymer einer zweiten Monomermischung handelt, die ein Monomer auf Basis eines konjugierten Diens, ein Monomer auf Basis eines aromatischen Vinyls und ein Monomer auf Basis einer ungesättigten Carbonsäure enthält;
wobei das Polymer (A) und das teilchenförmige Polymer (B) in einem Gewichtsverhältnis von 60:40 bis 90:10 enthalten sind.

2. Negativelektroden-Bindemittelzusammensetzung nach Anspruch 1, wobei ein durch Trocknen der Negativelektroden-Bindemittelzusammensetzung hergestellter Film einen Feuchtigkeitsgehalt von 10 Gew.-% oder weniger aufweist, wobei der Feuchtigkeitsgehalt wie in der Beschreibung beschrieben gemessen wurde.

3. Negativelektroden-Bindemittelzusammensetzung nach Anspruch 1, wobei ein durch Trocknen der Negativelektroden-Bindemittelzusammensetzung hergestellter Film einen Feuchtigkeitsgehalt von 8 Gew.-% oder weniger aufweist, wobei der Feuchtigkeitsgehalt wie in der Beschreibung beschrieben gemessen wurde.

4. Negativelektroden-Bindemittelzusammensetzung nach Anspruch 1, wobei das teilchenförmige Polymer (B) einen durchschnittlichen Teilchendurchmesser von 1 μm oder weniger aufweist, wobei der durchschnittliche Teilchendurchmesser durch ein dynamisches Lichtstreuverfahren wie in der Beschreibung beschrieben gemessen wurde.

5. Negativelektroden-Bindemittelzusammensetzung nach Anspruch 1, wobei das Polymer (A) ein gewichtsmittleres Molekulargewicht von 100.000 g/mol bis 2.000.000 g/mol aufweist, wobei das gewichtsmittlere Molekulargewicht durch ein Gelpermeationschromatographieverfahren wie in der Beschreibung beschrieben gemessen wurde.

6. Negativelektrode, umfassend eine Negativelektroden-Aktivmaterialschicht, die ein siliciumbasiertes Negativelektroden-Aktivmaterial enthält, und die Negativelektroden-Bindemittelzusammensetzung nach Anspruch 1.

7. Negativelektrode nach Anspruch 6, wobei die Negativelektroden-Aktivmaterialschicht ferner ein anderes Negativelektroden-Aktivmaterial als das siliciumbasierte Negativelektroden-Aktivmaterial umfasst.

8. Negativelektrode nach Anspruch 7, wobei das siliciumbasierte Negativelektroden-Aktivmaterial in einer Menge von 5 Gew.-% oder mehr des gesamten Negativelektroden-Aktivmaterials enthalten ist.

9. Eine Lithium-Sekundärbatterie, umfassend die negative Elektrode nach Anspruch 6.

**Revendications**

1. Composition de liant d'électrode négative comprenant :

un polymère (A) d'un premier mélange monomère comprenant de 50 à 90 parties en poids d'un monomère contenant un groupe de (méth)acrylamide,
de 5 à 45 parties en poids d'un monomère à base d'acide carboxylique insaturé, et
de 1 à 25 parties en poids d'un monomère à solubilité dans l'eau de 100 g/L ou moins, qui est au moins un sélectionné parmi le groupe composé d'alkyle (méth)acrylate contenant 1 à 10 atomes de carbone, de (méth) acrylonitrile, et de styrène, et la solubilité étant mesurée en ajoutant le monomère à 1 L d'eau à 25 °C; et
un polymère particulaire (B), le polymère particulaire (B) étant un polymère d'un deuxième mélange de monomère contenant un monomère conjugué à base de diène, un monomère aromatique à base de vinyle, et un monomère à base d'acide carboxylique insaturé;

le polymère (A) et le polymère particulaire (B) étant inclus avec un rapport pondéral de 60/40 à 90/10.

2. Composition de liant d'électrodes négative selon la revendication 1, un film préparé en séchant la composition du liant d'électrode négative ayant une teneur en humidité de 10 % en poids ou moins, la teneur en humidité ayant été mesurée conformément à la description.

3. Composition de liant d'électrode négative selon la revendication 1, un film préparé en séchant la composition du liant d'électrode négative ayant une teneur en humidité de 8 % en poids ou moins, la teneur en humidité ayant été mesurée conformément à la description.

4. Composition du liant d'électrode négative selon la revendication 1, le polymère particulaire (B) ayant une granulométrie moyenne de 1 $\mu$m ou moins, la granulométrie moyenne ayant été mesurée par une méthode de diffusion dynamique de la lumière conformément à la description.

5. Composition du liant d'électrode négative selon la revendication 1, la masse moléculaire moyenne en poids du polymère (A) mesurant de 100 000 g/mol à 2 000 000 g/mol, la masse moléculaire moyenne en poids ayant été mesurée par une méthode de chromatographie à perméation de gel conformément à la description.

6. Électrode négative comprenant une couche de matière active d'électrode négative contenant une matière active d'électrode négative à base de silicium, et la composition du liant d'électrode négative selon la revendication 1.

7. Électrode négative selon la revendication 6, la couche de matière active d'électrode négative comprenant en outre une matière active d'électrode négative autre que la matière active d'électrode négative à base de silicium.

8. Électrode négative selon la revendication 7, la matière active d'électrode négative à base de silicium étant incluse dans la mesure de 5% en poids, ou davantage, de l'intégralité de la matière active d'électrode négative.

9. Batterie secondaire au lithium comprenant l'électrode négative selon la revendication 6.

# EP 4 099 450 B1

## REFERENCES CITED IN THE DESCRIPTION

**Patent documents cited in the description**

- JP 2009245773 A
- EP 3154113 A1
- WO 2015008626 A1
- WO 2018173717 A1
- US 2018258202 A1